Europäisches Patentamt

European Patent Office

Office européen des brevets

(11) Veröffentlichungsnummer: **0 308 533**
**A1**

(12) **EUROPÄISCHE PATENTANMELDUNG**

(21) Anmeldenummer: 87113961.4

(22) Anmeldetag: 24.09.87

(51) Int. Cl.⁴: **G02C 5/22**

(43) Veröffentlichungstag der Anmeldung:
29.03.89 Patentblatt 89/13

(84) Benannte Vertragsstaaten:
AT CH DE ES FR IT LI

(71) Anmelder: **OBE-Werk Ohnmacht & Baumgärtner GmbH & Co. KG**
**Turnstrasse 20**
**D-7536 Ispringen(DE)**

(72) Erfinder: **Drlik, Günther**
**Adolf-Sautter-Strasse 3**
**D-7530 Pforzheim 8(DE)**

(74) Vertreter: **Hubbuch, Helmut, Dipl.-Ing et al**
**Patentanwälte Dr. Rudolf Bauer Dipl.-Ing.**
**Helmut Hubbuch Dipl.-Phys. Ulrich**
**Twelmeier Westliche Karl-Friedrich-Strasse**
**29-31**
**D-7530 Pforzheim(DE)**

(54) **Federscharnier für Brillen.**

(57) Die Efindung bezieht sich auf ein Federscharnier für Brillen zum Überdrücken des Brillenbügels über die Anschlagstellung hinaus, welches auch einen Schnappeffekt zwischen Ruhe- und Offenstellung erzeugt und kennzeichnet sich dadurch, daß der Sperrkörper durch ein in der Nutführung des Brillenbügels einzusetzendes Winkelstück gebildet ist, welches verrast- oder verschraubbar ist und eine in das Scharniergelenk reichende Nase bildet und welches Winkelstück einerseits der Federabstützung und andererseits der Nockenanlage des Mittelteilscharnierauges zur Erzeugung eines beidseitigen Schnappeffekts zwischen Ruhe- und Offenstellung dient.

EP 0 308 533 A1

Fig.1

## Federscharnier für Brillen

Die Erfindung bezieht sich auf ein Federscharnier für Brillen zum Überdrücken des Brillenbügels über die Anschlagstellung hinaus, welches auch einen Schnappeffekt zwischen Ruhe- und Offendstellung erzeugt.

Es sind Federscharniere für Brillen zum Überdrücken des Brillenbügels über die Anschlagstellung hinaus zur federnden Anlage am Kopf des Trägers bekannt, wie z.B. die DE-PS 21 15 596 zeigt.

Es ist nun Aufgabe der Erfindung hier eine besonders einfache und sichere Ausführung eines solchen Federscharniers mit Schnappeffekt zu schaffen.

Das Federscharnier nach dem Oberbegriff des Anspruchs 1 kennzeichnet sich gemäß der Erfindung hierzu dadurch, daß der Sperrkörper durch ein in der Nutführung des Brillenbügels einzusetzendes Winkelstück gebildet ist, welches verrast- oder verschraubbar ist und eine in das Scharniergelenk reichende Nase bildet und welches Winkelstück einerseits der Federabstützung und andererseits der Nockenanlage des Mittelteilscharnierauges zur Erzeugung eines beidseitigen Schnappeffekts zwischen Ruhe- und Offenstellung dient. Hierdurch wird eine robuste Ausführungsform erreicht.

Im einzelnen kann hierbei die Nase über dem Federanschlag eine Keilschrägung aufweisen als Anschlag für das gegengeschrägte Schieberteil (Gegenschräge) im Brillenbügel zur Wegbegrenzung in Überdrückstellung.

Federscharniere gemäß der Erfindung sind an Hand von zwei bevorzugten Ausführungsbeispielen in der Zeichnung dargestellt und nachfolgend beschrieben und zwar zeigen:

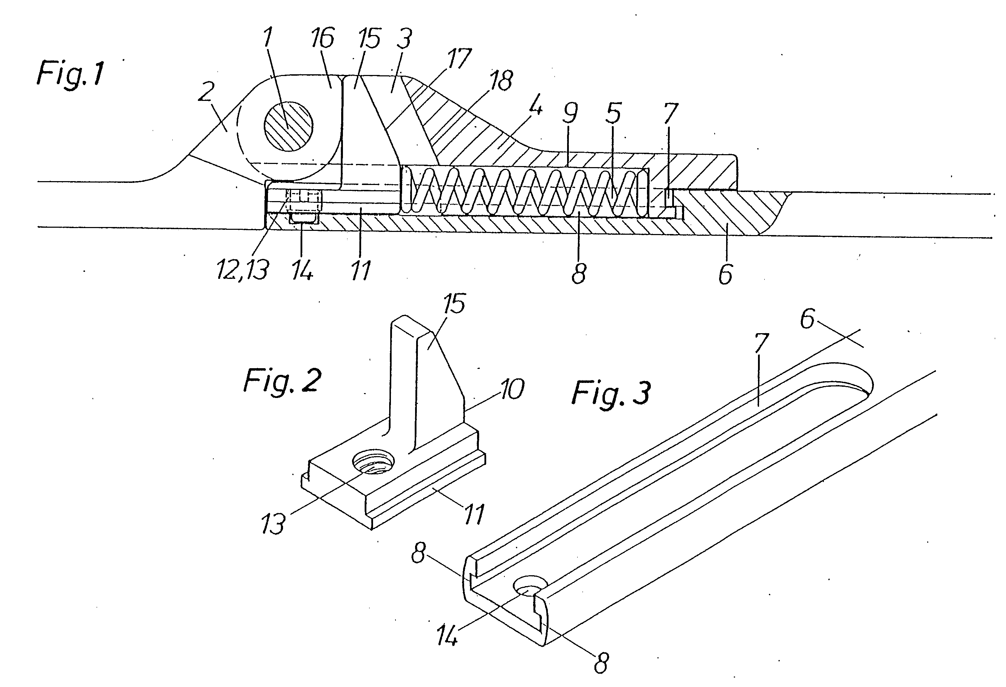

Figur 1 einen Längsschnitt durch ein Federscharnier einer ersten Ausführungsform,

Figur 2 and 3 eine perspektivische Ansicht des zugehörigen Sperrkörpers mit Nase sowie der Führungsaufnahme am Bügelende,

Figur 4 einen Längsschnitt durch ein Federscharnier einer zweiten Ausführungsform,

Figur 5 einen Teilschnitt zu Fig. 4 beim Einbringen des Sperrkörpers,

Figur 6 bis 8 eine perspektivische Ansicht des zugehörigen Sperrkörpers mit Eckstück und Aufnahmezapfen für die Feder, sowie der Führungsaufnahme am Bügelende,

Figur 9 einen Längsschnitt durch ein Federscharnier mit den verschiedenen Bügelstellungen.

Wie aus der Zeichnung zum ersten Ausführungsbeispiel ersichtlich wird, besteht das Federscharnier aus dem mittels Gelenkschraube 1 schwenkbar miteinander verbundenem Mittelteilscharnier 2 mit einem zwischenliegenden Scharnierauge und Bügelteilscharnier 3 mit zwei äußeren Scharnieraugen, letztere einteilig mit dem Schieberteil 4, welches (4) unter Aufnahme der Feder 5 am Brillenbügelende 6 in der Führungsausnehmung 7 in beidseitigen Nutführungen 8 läuft. Hierbei wird die Feder 5 in der Federaufnahme 9 vom Schieberteil 4 aufgenommen und steht dem Sperrkörper in Form eines Winkelstücks 10 an.

Das Winkelstück 10 reicht mit dem ersten Winkelschenkel als Basis 11 in der Nutführung 8 im Bügelende 6 unter die beiden Bügelteilscharnieraugen 3 und weist hier eine Öffnung zur Verrastung mittels Sperrkörper auf oder, wie dargestellt, reicht die Schraube 12 vom Schraubloch 13 in's Sackloch 14 zur Festlegung im Nutführungsboden. Der zweite Winkelschenkel bildet hier die Nase 15, welche (15) in das Scharniergelenk reicht und einerseits mit dem Nocken 16 des Mittelteilscharnierauges 2 zum beidseitigen Schnappeffekt zwischen Ruhe- und Offenstellung führt und andererseits mit der Keilschrägung 17 am Rücken als Anschlag für die Gegenschräge 18 am Schieberteil 4 im Brillenbügelende 6 zur Wegbegrenzung in Überdruckstellung dient.

Nach der Zeichnung zum zweiten Ausführungsbeispiel besteht das Federschrnier ebenfalls aus dem mittels Gelenkschraube 21 miteinander verbundenem Mittelteil scharnier 22 mit einem zwischenliegenden Scharnierauge und Bügelteilscharnier 23 mit zwei äußeren Scharnieraugen am Schieberteil 24, welches (24) die Feder 25 am Brillenbügelende 26 aufnimmt und in der Führungsausnehmung 27 in beidseitigen Nutführungen 28 läuft. Die Feder 25 liegt hierbei in der Federaufnahme 29 vom Schieberteil 24 und steht dem Sperrkörper in Form eines Winkelstücks 30 mittelbar an.

Das Winkelstück 30 reicht mit dem ersten Winkelschenkel als Basis 31 in der Nutführung 28 in Richtung der Federanlage und besitzt hier eine Öffnung zur Verrastung mittels Sperrkörper in Form eines Zylinderstücks 32, welches (32) hier nach dem Einfallen vom Bohrloch 33 in's Sackloch 34 zur Verriegelung im Nutführungsboden reicht. Der zweite Winkelschenkel bildet hier die Nase 35, welche in das Scharniergelenk reicht und einerseits mit dem Nocken 36 des Mittelteilscharnier 22 zum beidseitigen Schnappeffekt zwischen Ruhe- und Offenstellung führt und andererseits mit der Keilschrägung 37 am Rücken als Anschlag für die Gegenschräge 38 am Schieberteil 24 im Brillenbügelende 26 zur Wegbegrenzung in Überdrückstellung dient.

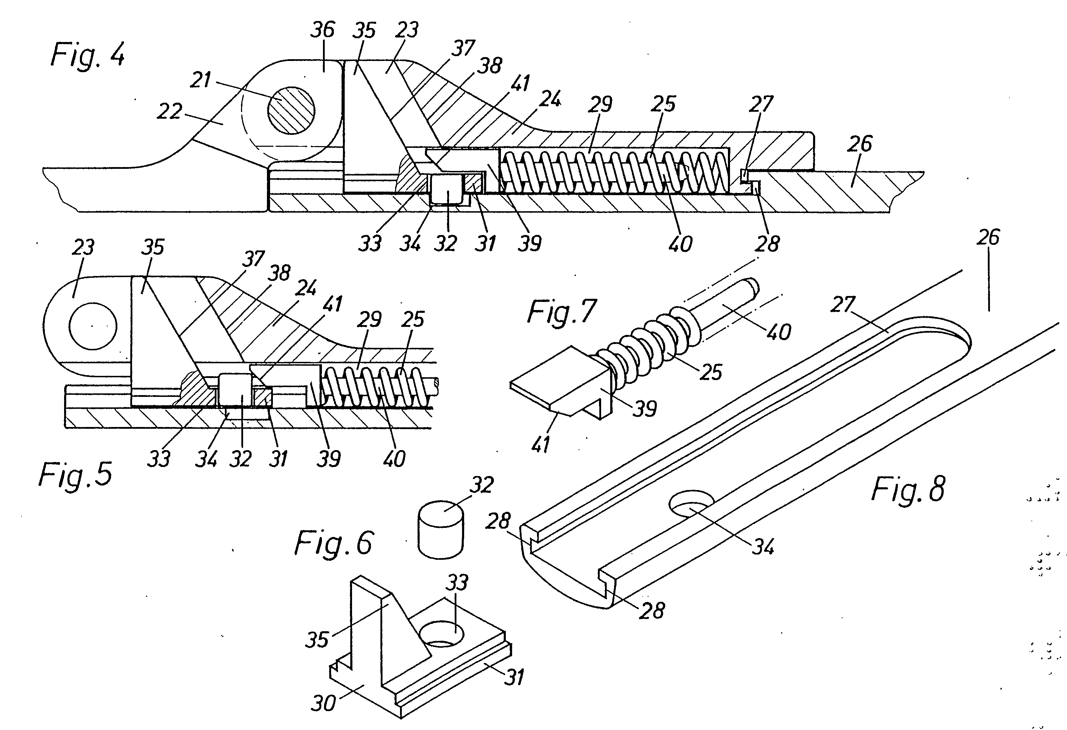

Bei dieser Ausführungsform wird der Basiswinkelschenkel (31) mit eingefallenem Zylinderstück 32 als Sperrkörper von einem Eckstück 39 am Ende des Aufnahmezapfen 40 für die Feder 25 übergriffen, welches Eckstück eine Anlaufschräge 41 zum Einbringen des Zylinderstücks 32 beim Einschieben des Basis-Winkelschenkel 31 entspr. Figur 5 aufweist.

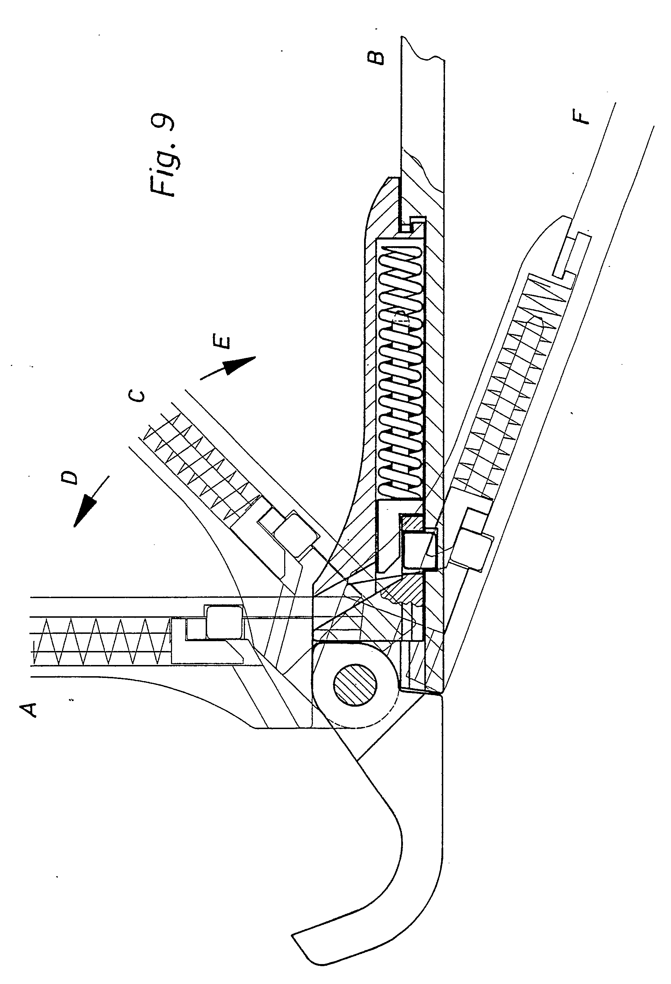

Schließlich zeigt Figur 9 ein erfindungsgemäßes Federscharnier in Geschlossenstellung A und Normal-Offenstellung B, zwischen welchem sich bei etwa 45° die Schnappstellung C infolge der am Nocken 36 anstehenden Nase 35 in beiden Richtungen D und E befindet. Schließlich zeigt F noch die Überdrückstellung.

**Ansprüche**

1. Federscharnier für Brillen zum Überdrücken des Brillenbügels über die Anschlagstellung hinaus zur federnden Anlage am Kopf des Trägers, bestehend aus gelenkig miteinander verbundenem Bügel- und Mittelteilscharnier, bei welchem das Bügelscharnier mit Schieberteil zur Federaufnahme und -Führung am Brillenbügelende gegen Federwirkung verschiebbar ist, wobei in der Bügelausnehmung beidseits Führungsnuten vorgesehen sind, sowie ein Sperrkörper als Federanschlag, der dem Bügelende zu einsetzbar ist, **dadurch gekennzeichnet,** daß der Sperrkörper durch ein in der Nutführung (8,28) des Brillenbügels (6,26) einzusetzendes Winkelstücks (10,30) gebildet ist, welches verrast- oder verschraubbar (12,32) ist und eine in das Scharniergelenk reichende Nase (15,35) bildet und welches Winkelstück (10,30) einerseits der Federabstützung (5, 25) und andererseits der Nockenanlage (16,36) des Mittelteilscharnierauges (2,22) zur Erzeugung eines beidseitigen Schnappeffekts zwischen Ruhe- und Offenstellung dient.

2. Federscharnier nach Anspruch 1, **dadurch gekennzeichnet,** daß die Nase (15,35) über dem Federanschlag eine Keilschrägung (17,37) aufweist als Anschlag für das gegengeschrägte Schieberteil (Gegenschräge 18,38) im Brillenbügel (6,26) zur Wegbegrenzung in Überdrückstellung.

3. Federscharnier nach Anspruch 1 oder 2, **dadurch gekennzeichnet,** daß der Sperrkörper (10,30) in Winkelform mit dem ersten Winkelschenkel als Basis (11,31) in die Nutführung (8,28) im Brillenbügel (6,26) reicht und an dieser eine Öffnung (13,33) zur Verrastung oder Verschraubung (12,32) mit dem Nutführungsboden (Sackloch 14,34) aufweist, während der zweite Winkelschenkel die Nase (15,35) bildet.

4. Federscharnier nach Anspruch 3, **dadurch gekennzeichnet,** daß der Basis-Winkelschenkel (11) in der Nutführung unter den beiden Bügelteilscharnieraugen (3) liegt mit Öffnung (13) zur Verschraubung mit in den Nutführungsboden (Sachloch 14) reichendem Sperrkörper (Schraubstück 12).

5. Federscharnier nach Anspruch 3, **dadurch gekennzeichnet,** daß der Basis-Winkelschenkel (31) in der Nutführung in Richtung Federanlage (25) liegt mit Öffnung (33) zur Verrastung mit in den Nutführungsboden (Sackloch 34) reichendem Sperrkörper (Zylinderstück 32).

6. Federscharnier nach Anspruch 5, **dadurch gekennzeichnet,** daß die Basis-Winkelschenkel (31) mit eingefallenem Sperrkörper (Zylinderstück 32) von einem Eckstück (39) am Ende des Aufnahmezapfens (40) für die Feder (25) übergriffen wird, welches Eckstück (39) eine Anlaufschräge (41) zum Einbringen des Sperrkörpers (32) beim Einschieben des Basis-Winkelschenkels (31) aufweist.

Fig.1

Fig.2

Fig.3

EP 0 308 533 A1

Fig. 4

Fig. 5

Fig. 6

Fig. 7

Fig. 8

*Fig. 9*

EP 0 308 533 A1

Europäisches
Patentamt

**EUROPÄISCHER RECHERCHENBERICHT**

Nummer der Anmeldung

EP 87 11 3961

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 149 230 (OBE-WERK) <br> * Zusammenfassung, Ansprüche; Figur 7 * <br> --- | 1-6 | G 02 C 5/22 |
| A | DE-U-8 515 139 (OBE-WERK) <br> * Ansprüche * <br> --- | 1-6 | |
| A | EP-A-0 191 944 (OBE-WERK) <br> * Ansprüche * <br> --- | 1-6 | |
| A | DE-A-3 115 816 (OBE-WERK) <br> * Ansprüche * <br> --- | 1-6 | |
| A | EP-A-0 166 822 (OBE-WERK) <br> * Ansprüche * <br> ----- | 1-6 | |

|  |
|---|
| RECHERCHIERTE SACHGEBIETE (Int. Cl.4) |
| G 02 C 5/22 |

Der vorliegende Recherchenbericht wurde für alle Patentansprüche erstellt

| Recherchenort | Abschlußdatum der Recherche | Prüfer |
|---|---|---|
| DEN HAAG | 24-05-1988 | CALLEWAERT-HAEZEBROUCK H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes Dokument

EPO FORM 1503 03.82 (P0403)